# EUROPEAN PATENT APPLICATION

(11) **EP 4 741 518 A1**
(43) Date of publication of application: **13.05.2026**
(21) Application number: 24211802.4
(22) Date of filing: 08.11.2024
(51) Int. Cl.: C22B 7/00, H01M 4/58, H01M 10/054, H01M 10/54

(54) **A METHOD FOR RECOVERING AN OFF-SPEC PRUSSIAN WHITE MATERIAL**

(71) Applicant: Altris AB, 753 41 Uppsala (SE)
(72) Inventor: RICCARDI, Ludovico, Uppsala (SE); MOGENSEN, Ronnie, Uppsala (SE)
(74) Representative: Kransell & Wennborg KB

(57) **Abstract**

The present disclosure generally relates to a method for recovering an off-spec Prussian White material comprising:
a) providing an off-spec Prussian White material;
b) reacting the off-spec Prussian White material with an aqueous solution comprising sodium cyanide (NaCN) or potassium cyanide (KCN) under conditions that allow for at least one Prussian White precursor to form.

The present disclosure also relates to a system for recovering an off-spec Prussian White material.

## Description

### TECHNICAL FIELD

The present disclosure generally relates to a method for recovering an off-spec Prussian White material and to a system for recovering the off-spec Prussian White material.

### BACKGROUND

Prussian White (PW) is an environmentally friendly cathode material, which has gained considerable attention due to its high theoretical capacity and rate performance. Prussian White has a crystal structure with an open three-dimensional framework and large interstitial voids, which makes it capable of storing sodium (or potassium) ions in an efficient manner.

Prussian White is typically used as the active cathode material in sodium ion battery cells, where it facilitates the reversible insertion and extraction of sodium (or potassium) ions during charge and discharge cycles.

Over time, through repeated charge and discharge cycles, the performance of the cathode and the battery cell may be impaired. For example, the cathode may no longer be able to hold sufficient charge to function effectively. When a battery cell reaches the end of its lifetime, the components, including the Prussian White cathode, are typically discarded.

The disposal process contributes to environmental waste and may also require specific waste handling procedures and precautions. The disposal of spent battery components also represents a loss of valuable resources, including cyanide molecules, iron, manganese, sodium, and/or potassium contained in Prussian White cathodes.

Accordingly, this approach is not sustainable in the long term. The discarded resources must be newly extracted and processed, which may place additional strain on natural resources and may increase the environmental footprint of battery production.

Furthermore, during the production of Prussian White, a proportion of the material formed may not meet the quality or performance specifications required for its intended use.

To date, such "failed" Prussian White material is typically incinerated at high temperatures. However, incineration presents an economic and environmental burden due to the release of significant amounts of greenhouse gases, contributing to climate change. Furthermore, the incineration process leads to the loss of valuable resources incorporated in the Prussian White material.

In view of this, there is a need for a sustainable process for recovering failed Prussian White containing materials and components. Such a process should enable recycling of valuable components, minimize waste, and reduce the overall environmental impact.

### SUMMARY

In view of above-mentioned and other drawbacks of the prior art, it is an object of the present disclosure to provide a sustainable and cost-efficient procedure for recovering Prussian White.

According to a first aspect of the present disclosure, there is provided a method for recovering an off-spec Prussian White material comprising:
a) providing an off-spec Prussian White material;
b) reacting the off-spec Prussian White material with an aqueous solution comprising sodium cyanide (NaCN) or potassium cyanide (KCN) under conditions that allow for at least one Prussian White precursor to form.

The present disclosure is based on the realization that Prussian White (PW) may be recovered by reacting an off-spec Prussian White material with an aqueous solution comprising NaCN or KCN such that the off-spec Prussian White material is converted into at least one Prussian White precursor. The Prussian White precursor(s) may subsequently be used in the manufacture of new, high-quality Prussian White material. In this regard, key components contained in the off-spec PW material are repurposed, recycled and re-used, thereby reducing the need for new material extraction. Furthermore, the emission of greenhouse gases is significantly reduced, and a more sustainable and cost-efficient solution is provided. Instead of discarding a spent battery or a Prussian White material of low quality, the material is converted into new precursor(s), which may be utilized for the synthesis of new Prussian White material associated with a higher quality.

The inventors have found that the reaction of the off-spec Prussian White with an aqueous solution comprising NaCN or KCN generates Prussian White precursor in a high yield. As demonstrated in the Example section, a significantly higher yield of Prussian White precursor is obtained with NaCN (or KCN) compared to an aqueous solution comprising sodium hydroxide (NaOH).

The off-spec Prussian White material may originate from a variety of sources.

For example, the off-spec Prussian White material may be derived from a failed Prussian White slurry, a failed Prussian White manufacturing process, a spent, discarded, or off-spec electrode, and/or a spent, discarded or off-spec battery cell.

During the production of Prussian White, manufacturing defects or variations in the synthesis process can result in a material that does not meet the required quality or performance specifications, such as improper stoichiometry, impurities, and/or inadequate sodium content. Furthermore, off-spec Prussian White may be generated from battery cells or cathodes that have reached the end of their lifetime. As sodium-ion and potassium-ion batteries degrade over time, the Prussian White contained in the cathodes may deteriorate or become contaminated, rendering it unsuitable for further use.

In exemplary embodiments, the off-spec Prussian White material may be defined by AₐX¹[X²(CN)₆]_{1-y}, wherein A is Na or K, a ≤ 2, 0 ≤ y ≤ 0.2, and wherein X¹ and X² are individually selected from Fe, Mn, Co, or Cr.

Typically, X¹ and X² are individually selected from Fe, and Mn. Iron and manganese are the most commonly used transition metals in Prussian White materials, especially in sodium ion battery applications.

In exemplary embodiments, a < 1.8, such as 1 < a < 1.8.

Such a Prussian White material is associated with a lower, or "insufficient" sodium (or potassium) content. Accordingly, such Prussian White material exhibit low specific capacity (commonly measured in Ah/kg) and suboptimal performance in battery application. A low sodium content is a common issue leading to a discarded Prussian White material; i.e. an off-spec material.

However, in embodiments wherein a ≤ 2, the sodium content may be within acceptable limits, but other factors, such as undesirably low degree of crystallinity, improper content of X¹, X², C, or N,, impurity levels, or undesirable variations in the ratio of X¹ to X² can result in off-spec Prussian White. These issues might affect the electrochemical stability, structural integrity, or ion transport properties of the Prussian White material.

In exemplary embodiments, the at least one Prussian White precursor may be a sodium or potassium hexacyanometallate.

A sodium hexacyanometallate is a salt compound consisting of sodium ions coordinated by hexacyanometallate anions. The hexacyanometallate anion consists of a metal center (such as iron, manganese, cobalt, or chromium) surrounded by six cyanide (CN⁻) ligands. For example, the at least one Prussian White precursor may be defined by A₄X¹(CN)₆ and/or A₄X²(CN)₆, wherein A is Na or K, and wherein X¹ and X² are individually selected from Co, Cr, Fe, and Mn.

Step b) of reacting the off-spec Prussian White material with an aqueous solution comprising sodium cyanide (NaCN) or potassium cyanide (KCN) may yield precursors of the same type, e.g., defined by A₄X¹(CN)₆.

For example, if the off-spec Prussian White material is defined by AₐX¹[X²(CN)₆]_{1-y}, wherein X¹ and X² are the same, then one type of precursor will be formed (defined by A₄X¹(CN)₆).

Alternatively, step b) may yield different types of precursors, defined by A₄X¹(CN)₆ and A₄X²(CN)₆, wherein X¹ is different from X².

For example, if the off-spec Prussian White material is defined by AₐX¹[X²(CN)₆]_{1-y}, wherein X¹ and X² are different, two different types of precursors will be formed (defined by A₄X¹(CN)₆, and A₄X²(CN)₆, respectively). In this case, both precursors may be used for subsequent Prussian White synthesis.

In exemplary embodiments, step b) may be performed at a temperature of from 40 to 95°C, preferably from 50 to 90°C.

The inventors have found that a temperature in this range significantly improves the conversion of the off-spec Prussian White material into Prussian White precursor in a high yield. Furthermore, the generation of insoluble and undesirable by-products is also reduced. Also, the conversion of off-spec Prussian White material proceeds relatively quickly without requiring excessive energy input.

A temperature below 40°C may result in slower reaction rates and incomplete conversion, while temperatures above 95°C could potentially lead to unwanted side reactions or degradation of the material.

In exemplary embodiments, step b) may be performed at a pH of from 8 to 14, preferably from 9 to 13.5, more preferably from 10 to 13.

An alkaline pH is important for maintaining the stability of the Prussian White precursor(s) and for promoting efficient conversion of the off-spec Prussian White material. Furthermore, the formation of unwanted insoluble by-products, such as iron hydroxides and iron oxides, is decreased, which could otherwise interfere with the recovery process.

In exemplary embodiments, the amount of sodium cyanide (NaCN) or potassium cyanide (KCN) in the aqueous solution may be in stoichiometric excess relative to the amount required to react with the off-spec Prussian White material and form the Prussian White precursor.

Accordingly, a sufficient quantity of cyanide ions is available to fully convert the off-spec Prussian White material, and to drive the reaction substantially to completion. A stoichiometric excess of cyanide ions avoids incomplete reactions, which could otherwise result in residual off-spec material or undesired by-products that may complicate downstream processing.

In exemplary embodiments, the stoichiometric excess of sodium cyanide (NaCN) or potassium cyanide (KCN) may range from 15% to 100%, more preferably from 20% to 100% above the amount required to react with the off-spec Prussian White material and form the Prussian White precursor.

The inventors have found that this range is advantageous to fully convert the off-spec Prussian White material into high-quality Prussian White precursor(s).

The excess of NaCN or KCN may vary depending on the starting off-spec Prussian White material. For example, if the starting off-spec material comprises a low amount of sodium and /or is highly degraded, a higher excess may be required, whereas for other starting off-spec materials, a lower excess may be sufficient.

In exemplary embodiments, the method may further comprise:
c) reacting the Prussian White precursor, after step b), with an acid selected from H₂SO₄, H₄C₂O₂, H₂C₂O₄, H₂CO₂, H₃PO₄, H₃PO₃, HCl, and HClO₂ under conditions that allow for a second Prussian White material to form.

The second Prussian White material is associated with a higher quality than the off-spec Prussian White material. For example, the second Prussian White material may have a higher sodium or potassium content than the off-spec Prussian White material.

Accordingly, an improved second Prussian White material can be obtained which is suitable for use as a cathode material in a sodium ion battery cell. In this regard, the method of the present disclosure effectively "recycles" the off-spec Prussian White material such that it may be re-used as a cathode material in new battery applications.

The method is associated with significantly reduced energy demands, and a reduced consumption of virgin materials. Furthermore, the method avoids excess waste and greenhouse gas emissions.

The second Prussian White materialmay be defined by A_{b}X¹[X²(CN)₆]_{1-y}, wherein A is Na or K, 1.8 ≤ b ≤ 2, 0 ≤ y ≤ 0.2, and wherein X¹ and X² are individually selected from Fe, Mn, Co, and Cr.

Step c) may be an acid decomposition reaction. Synthesis of Prussian White material via acid decomposition is advantageous to increase the amount of sodium (or potassium) and decrease the number of [X²(CN)₆] vacancies in the (second) Prussian White material.

To trigger acid decomposition of the Prussian White precursor, step c) may be performed at a pH of from 1.8 to 4.5, preferably from 2 to 3.5.

Furthermore, step c) may be performed at a temperature of from 65 to 95°C, preferably from 75 to 95°C.

The inventors have found that a pH and/or temperature in these ranges significantly improves the decomposition rate of the Prussian White precursor and results in the formation of Prussian white having a high sodium (or potassium) content.

According to another aspect, there is provided a system for recovering an off-spec Prussian White material comprising a first reactor unit configured to:
a) receive an off-spec Prussian White material; and
b) conduct a first reaction of the off-spec Prussian White material with an aqueous solution comprising sodium cyanide (NaCN) or potassium cyanide (KCN) under conditions that allow for at least one Prussian White precursor to form.

The system may further comprise a second reactor unit configured to:
c) conduct a second reaction of the Prussian White precursor with an acid selected from H₂SO₄, H₄C₂O₂, H₂C₂O₄, H₂CO₂, H₃PO₄, H₃PO₃, HCl, and HClO₂ under conditions that allow for a second Prussian White material to form.

The effects and features of the second aspect are analogous to those described above in connection with the first aspect. Embodiments mentioned in relation to the first aspect are compatible with the second aspect.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Figure 1 shows a flowchart explaining the steps of a method in accordance with exemplary embodiments of the present disclosure;
Figure 2 schematically illustrates a system according to a second aspect of the present disclosure;
Figure 3 illustrates the XRD diffractogram for the Prussian White precursor obtained from Example 1;
Figure 4 illustrates the XRD diffractogram for the insoluble by-products obtained from Example 1;
Figure 5 illustrates the XRD diffractogram for the insoluble by-products obtained from Example 2.
Figure 6 illustrates the XRD diffractograms for the insoluble by-products obtained from Comparative Example 1;
Figures 7a-b illustrates the XRD diffractograms for the off-spec Prussian white material used in Example 21 and the Prussian White material obtained in Example 21.

### DETAILED DESCRIPTION

The present disclosure will now be described more fully hereinafter with reference to the accompanying drawings. The present disclosure may, however, be embodied in many different forms and should not be construed as limited to the embodiments set forth herein; rather, these embodiments are provided for thoroughness and completeness, and fully convey the scope of the present disclosure to the skilled person.

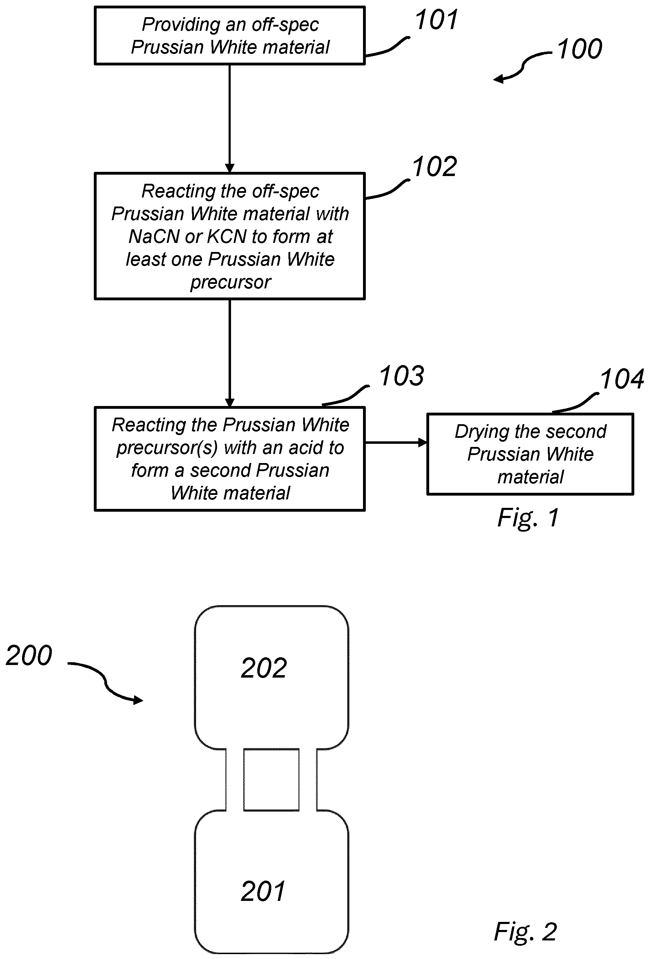

Figure 1 is a flow-chart schematically illustrating the steps of a method of the present disclosure. The method 100 for recovering an off-spec Prussian White material comprises:
a) providing an off-spec Prussian White material (step 101);
b) reacting the off-spec Prussian White material with an aqueous solution comprising sodium cyanide (NaCN) or potassium cyanide (KCN) under conditions that allow for at least one Prussian White precursor to form (step 102).

As described above, the present disclosure is based on the realization that Prussian White (PW) material may be recovered by reacting an off-spec Prussian White material with an aqueous solution comprising NaCN or KCN such that the off-spec Prussian White material is converted into at least one Prussian White precursor. It is contemplated that this entails a chemical reaction between the off-spec Prussian White material and NaCN or KCN present in the aqueous solution.

As used herein, the term "off-spec Prussian White material" means a Prussian White material that does not meet predefined quality or performance specifications required for its intended use. Such predetermined quality or performance specifications may include sodium or potassium content, as determined using, e.g., Inductively Coupled Plasma Optical Emission Spectroscopy (ICP-OES) or X-ray powder diffraction (XRD), crystal structure, as determined using XRD, specific surface area, as determined using e.g. Brunauer-Emmett-Teller (BET) nitrogen gas adsorption methods, particle size distribution (PSD), as determined using particle size analysis, and/or morphology, as determined using, e.g., Scanning Electron Microscopy (SEM). In other words, the off-spec Prussian White material may be described as an outside of specification Prussian White material.

The Prussian White material may also be off-spec due to an impaired electrochemical performance. For example, an off-spec Prussian White material may have acceptable sodium (or potassium) content but still fail to meet prescribed specifications due to poor battery cycling performance. An off-spec Prussian White material may also be associated with a high level of impurities. The Prussian White material may have become off-spec due to contamination or degradation over time.

The off-spec Prussian White material may be derived from a failed Prussian White slurry, a failed Prussian White manufacturing process, a spent, discarded, or off-spec electrode, and/or a spent, discarded or off-spec battery cell.

Expressed differently, the off-spec Prussian White material may be derived from industrial material and/or consumer material. The industrial material may comprise waste or scrap generated during the manufacturing process. The consumer material may comprise material derived from consumer-used products. The consumer-used products may for example be a spent battery cell, e.g., a battery cell that exhibits a too high degree of self-discharge.

The off-spec Prussian White material may be defined by the formula AₐX¹[X²(CN)₆]_{1-y}, wherein A is Na or K, a ≤ 2, 0 ≤ y ≤ 0.2, and wherein X¹ and X² are individually selected from Fe, Mn, Co, and Cr. Typically, a < 1.8, such as 1< a < 1.8.

As illustrated in figure 1, the method may further comprise a step c) of reacting the at least one Prussian White precursor, after step b), with an acid selected from H₂SO₄, H₄C₂O₂, H₂C₂O₄, H₂CO₂, H₃PO₄, H₃PO₃, HCl, and HClO₂ under conditions that allow for a second Prussian White material to form (step 103 in figure 1).

The Prussian White material (off-spec Prussian White material and second Prussian White material) comprises iron (Fe), manganese (Mn), cobalt (Co), or chromium (Cr) ions which are linked through cyanide (CN) bridges, forming a three-dimensional framework. The framework forms a cubic-like arrangement, in which each iron, manganese, cobalt or chromium ion is surrounded by six cyanide groups. Typically, X¹ and X² are selected from Fe and Mn. Sodium or potassium ions reside within the cavities or interstitial sites of the cubic arrangement formed by, e.g., Fe[Fe(CN)₆] or Mn[Mn(CN)₆] units. The Prussian white material is solid. The Prussian White material may be in the form of particles, e.g. discrete portions of solid matter.

Herein, the term Prussian white material (off-spec Prussian White material and second Prussian White material) encompasses both hydrated and dehydrated Prussian white materials.

Hydrated Prussian white material may be understood as Prussian white material having water molecules arranged in voids and/or interstitial spaces of the crystal structure. The water molecules may be bonded through a hydrogen bond with the nitrogen of the (CN)₆, a metal-ligand bond with one of the transition metal cations, or an ion-dipole bond with sodium (or potassium).

Dehydrated Prussian white material may be understood as Prussian white material substantially free of water molecules arranged in voids and/or interstitial spaces of the crystal structure.

The amount of water molecules arranged in voids and/or interstitial spaces of the crystal structure may be determined using Thermogravimetric Analysis (TGA).

The chemical composition of the Prussian white material (off-spec Prussian White material and second Prussian White material) may be measured by methods known in the art. For example, Inductively Coupled Plasma Optical Emission Spectroscopy (ICP-OES) (using, e.g., PerkinElmer Avio 200), CHNOS elemental analysis and/or Mössbauer spectrometry (using, e.g., an MS 96 spectrometer) may be used to measure the chemical composition in a sample of the Prussian white material. It is understood that the formulas presented herein, e.g., AₐX¹[X²(CN)₆]_{1-y} and A₄X¹(CN)₆ describe the chemical composition.

The at least one "Prussian White precursor" is typically a sodium or potassium hexacyanometallate. The Prussian White precursor may be defined by A₄X¹(CN)₆ and/or A₄X²(CN)₆, wherein A is Na or K, and wherein X¹ and X² are individually selected from Co, Cr, Fe, and Mn. Typically, X¹ and X² are independently selected from Fe, and Mn. In some embodiments, X¹ and X² are Fe or Mn.

Step b) of reacting the off-spec Prussian White material with an aqueous solution comprising sodium cyanide (NaCN) or potassium cyanide (KCN) "under conditions that allow for at least one Prussian White precursor to form" typically involves performing step b) at a temperature of from 40 to 95°C, preferably from 50 to 90°C, e.g. from 65 to 90°C, and/or at a pH of from 8 to 14, preferably from 9 to 13.5, more preferably from 10 to 13.

As demonstrated in the Examples, a high yield of Prussian White precursor and a low amount of undesired insoluble by-products are obtained at these conditions.

The alkaline pH may be controlled by performing step b) in the presence of an alkaline additive. Hence, in step b), the off-spec Prussian White material may be reacted with the salt in the presence of an alkaline additive. The alkaline additive may be selected from the group consisting of NH₄OH, NaOH, Na₃PO₄, Na₂CO₃, KOH, and K₂CO₃.

Controlling the pH within this range is advantageous for obtaining a high yield of high-quality Prussian White precursor without the interference of lower quality co-precipitates. Moreover, controlling the pH within this range may advantageously decrease the amount of formed insoluble iron by-products.

NH₄OH, NaOH, Na₃PO₄, Na₂CO₃, KOH, and K₂CO₃ are also known as ammonium hydroxide, sodium hydroxide, trisodium phosphate, sodium carbonate, potassium hydroxide, and potassium carbonate, respectively.

Step b) may be performed at a reaction period of from 5 minutes to 5 hours, e.g. from 10 minutes to 3 hours, e.g. from 15 minutes to 1 hour.

Step b) is typically performed in an inert atmosphere. In some examples, the inert atmosphere is created by a flow of argon gas and hydrogen gas. In other words, step b) may be performed in an atmosphere comprising an inert gas, e.g. nitrogen and/or argon. This may advantageously decrease the amount of formed insoluble iron by-products.

In exemplary embodiments, the amount of sodium cyanide (NaCN) or potassium cyanide (KCN) in the aqueous solution is in stoichiometric excess relative to the amount required to react with the off-spec Prussian White material and form the Prussian White precursor.

As used herein, the term "stoichiometric excess relative to the amount required to react with the off-spec Prussian White material" means that the amount of NaCN or KCN is greater than the minimum molar quantity needed to completely react with the off-spec Prussian White material; i.e. to ensure that all available off-spec Prussian White material is fully converted to the desired precursor. The stoichiometric excess typically means that more than 6 NaCN (or KCN) units are needed per off-spec Prussian White unit. The minimum molar quantity can be understood as the amount needed to provide a stoichiometrically balanced reaction.

It is understood that stoichiometric excess refers to an excess of substance in moles. Thus, herein stoichiometric excess may also be referred to as molar excess.

The stoichiometric excess of sodium cyanide (NaCN) or potassium cyanide (KCN) may be at least 5%, such as in the range from 5% to 100%, e.g. from 15% to 100%, preferably from 20% to 100%, more preferably from 50% to 100% above the amount required to react with the off-spec Prussian White material and form the Prussian White precursor.

In exemplary embodiments, the stoichiometric excess of sodium cyanide (NaCN) or potassium cyanide (KCN) is in the range of from about 5% to about 20%.

A stoichiometric excess of cyanide ions avoids incomplete reactions, which could otherwise result in residual off-spec material or undesired by-products that may complicate downstream processing. Expressed differently, it is contemplated that the stoichiometric excess of NaCN or KCN, and thus cyanide ions, drives the formation of Prussian White precursor closer to completion and increases the consumption of ingoing off-spec Prussian White material. Any unreacted excess NaCN or KCN may advantageously be recycled and used to repurpose additional off-spec Prussian White material.

As demonstrated in the Example section, the stoichiometric excess of NaCN or KCN is associated with a significantly improved yield of high quality Prussian White precursor, as well as a significantly reduced yield of insoluble by-products compared to when an excess of NaOH is used (see table 1).

The concentration of sodium cyanide (NaCN) or potassium cyanide (KCN) in the aqueous solution may be equal to or above 0.1 M, e.g. from 0.1 M to 13 M, e.g. from 0.5 M to 5.0 M, e.g. from 0.5 M to 3.0 M.

In exemplary embodiments, the weight of sodium cyanide (NaCN) or potassium cyanide (KCN) in the aqueous solution is from 5 % less to 90 % more than the weight of the off-spec Prussian White material, such as in an amount of from 0.3 % less to 90 % more than the off-spec Prussian White material. This advantageously allows for an increased amount of off-spec Prussian White material being converted to precursor.

As mentioned hereinbefore, the method may further comprise a step c) of reacting the at least one Prussian White precursor, after step b), with an acid selected from H₂SO₄, H₄C₂O₂, H₂C₂O₄, H₂CO₂, H₃PO₄, H₃PO₃, HCl, and HClO₂ under conditions that allow for a second Prussian White material to form (step 103 in figure 1).

H₂SO₄, H₄C₂O₂, H₂C₂O₄, H₂CO₂, H₃PO₄, H₃PO₃, HCl, and HClO₂ are also known as sulfuric acid, acetic acid, oxalic acid, formic acid, phosphoric acid, phosphorous acid, hydrochloric acid, and chlorous acid respectively.

NaCN and KCN are also known as sodium cyanide and potassium cyanide, respectively.

Reacting the at least one Prussian White precursor with an acid "under conditions that allow for a second Prussian White material to form" means performing step c) at a temperature of from 65 to 98°C, preferably from 75 to 95°C, preferably from 80 to 95°C, and/or at a pH of from 1.8 to 4.5, preferably from 2 to 3.5.

It is contemplated that these conditions trigger acid decomposition of the Prussian White precursor(s), whereby the second Prussian White material is formed. Reacting the Prussian White precursor(s) with an acid may thus be an acid decomposition reaction. Expressed differently, the conditions of step c) allow for acid decomposition of the first precursor and when present the second precursor. Under these conditions, an improved yield of high-quality Prussian White may be obtained ("second Prussian White material"). Furthermore, under these conditions, the risk of unwanted side-reactions which may lead to a decreased yield is significantly reduced.

Step c) may be performed during 1 to 24 hours, such as 2 to 20 hours, preferably 3 to 12 hours, more preferably 4 to 8 hours.

The second Prussian White material is associated with a higher quality compared to the off-spec Prussian White starting material. The second Prussian White material is suitable for use as the active material in a cathode of a sodium ion battery cell.

The second Prussian White material may have a higher sodium or potassium content than the off-spec Prussian White material. The sodium or potassium content may be determined using Inductively Coupled Plasma Optical Emission Spectroscopy (ICP-OES) analysis or X-ray Powder Diffraction (XRD).

The second Prussian White material may be defined by A_{b}X¹[X²(CN)₆]_{1-y}, wherein A is Na or K, 1.8 ≤ b ≤ 2, 0 ≤ y ≤ 0.2, and wherein X¹ and X² are individually selected from Fe, Mn, Co, and Cr.

Typically, b is higher than a.

Typically, X¹ and X² are individually selected from Fe, and Mn.

The high sodium content associated with the second Prussian White material makes it particularly suitable for use as a cathode active material and allows for the provision of battery cells having a high specific capacity.

The second Prussian White material, when used as a cathode active material, facilitates the intercalation and deintercalation of sodium (or potassium) ions during repeated charging and discharging cycles. This process is crucial for the movement of ions that generates electrical current in a battery. The open Prussian White framework allows for easy movement of ions, thereby contributing to an improved cycling stability and capacity of the battery cell. In particular, the second Prussian White material obtained by the method of the present disclosure has a very high sodium (or potassium) content which is associated with an improved specific capacity of the battery cell.

Furthermore, the second Prussian White material obtained is associated with a low vacancy content. A high vacancy content may compromise the structural integrity of the material making it more prone to structural degradation and/or collapsing during cycling in battery applications. Furthermore, with increasing vacancy content the material's capacity for storing sodium (or potassium) is reduced as the charge balance must be maintained in the material.

As illustrated in figure 1, the method may comprise a step of drying the second Prussian White material obtained in step c) (denoted 104 in figure 1).

The method may comprise the steps of:
- separating or filtering the second Prussian White material obtained in step c);
- drying the second Prussian White material.

The separation step may for example be performed using a filter press or a centrifuge.

The step of drying may be performed by means known to the skilled person. The step of drying may for example be performed using a rotary dryer, a fluidized bed dryer, a spray dryer, a vacuum dryer, or a conveyor dryer.

The method of the present disclosure may be an in-line method. Hence, the entire process may be performed continuously without interruption. This eliminates the need for intermediate recovery, drying, or sodium enrichment steps, which may reduce processing time and energy consumption. Additionally, the in-line configuration minimizes handling and contamination risks, enhancing both efficiency and product quality, making it highly suitable for large-scale production. Furthermore, the use of toxic and costly organic solvents can be avoided.

Figure 2 schematically illustrates a system according to a second aspect of the present disclosure. According to the second aspect, there is provided a system 200 for recovering an off-spec Prussian White material comprising a first reactor unit 201 configured to:
a) receive an off-spec Prussian White material; and
b) conduct a first reaction of said off-spec Prussian White material with an aqueous solution comprising sodium cyanide (NaCN) or potassium cyanide (KCN) under conditions that allow for at least one Prussian White precursor to form.

The system 200 may further comprises a second reactor unit 202 configured to:
c) conduct a second reaction of the at least one Prussian White precursor with an acid selected from H₂SO₄, H₄C₂O₂, H₂C₂O₄, H₂CO₂, H₃PO₄, H₃PO₃, HCl, and HClO₂ under conditions that allow for a second Prussian White material to form

The second reactor unit 202 may be arranged downstream of the first reactor unit 201. The second reactor unit 202 may be arranged in fluid communication with the first reactor unit 201.

As used herein, the term "fluid" includes liquid and gas.

That the second reactor unit is arranged in "fluid communication" with the first reactor unit means that the connection between the reactor units allow for the flow or transfer of fluid (liquids or gases) between them. The connection may be direct or through conduits, pipes, channels, or passages. The fluid communication may be facilitated using valves, pumps, seals, and other mechanisms to regulate flow rates, pressure, and direction.

Herein, a reactor unit configured to conduct a reaction, refers to a unit or device able to facilitate and control chemical and/or physical reactions under specified conditions. The reactor unit may be equipped with the necessary structural, mechanical, and control components known in the art. The system may comprise one or more than one reactor units. Hence, the system may also be referred to as a reactor assembly. The system may be configured for batchwise or continuous processing.

### EXAMPLES

### General description of the experimental setup for repurposing of off-spec Prussian White material

A plurality of experiments of the repurposing of off-spec Prussian White material were conducted. The following general experimental set-up was utilized:

An aqueous solution comprising a predetermined amount sodium cyanide was prepared. The aqueous solution was maintained at a predetermined temperature whereafter a predetermined amount of off-spec Prussian White material was added to the aqueous solution to form a mixture. The off-spec Prussian White material was of the type sodium iron hexacyanoferrate comprising a relatively low amount of sodium.

The mixture was left to react for a predetermined time to form a dissolved Prussian White precursor (sometimes referred to as PW precursor) and blue or brown insoluble by-products. Subsequently, the mixture was filtered to remove insoluble by-products thereby obtaining a filtrate comprising the dissolved Prussian White precursor. The insoluble material was washed with deionized water to dissolve any Prussian White precursor, and the resulting wash water was combined with the filtrate. The combined wash water and filtrate was concentrated by evaporation, and the Prussian White precursor was crystallized and filtrated. The crystallized product was dried in a vacuum oven at 55°C for about 12 hours.

The dried crystallized product was analyzed using X-ray Powder Diffraction (XRD) and Pawley fitting to determine the presence of Prussian White precursor represented by the formula Na₄Fe(CN)₆. The insoluble by-product was also analyzed using XRD and Pawley fitting or Rietveld refinement to determine what species were present.

The yield of Prussian White precursor and insoluble by-products were calculated according to the following:

The yield of Prussian White precursor was calculated as the molar amount of obtained Prussian White precursor over the theoretical amount of obtainable Prussian White precursor based on the molar amount of ingoing off-spec Prussian White material (estimated as sodium iron hexacyanoferrate, Na₂Fe[Fe(CN)₆]). The yield of insoluble by-products was calculated based on the weight of obtained insoluble by-products over the weight of ingoing off-spec Prussian White material (estimated as sodium iron hexacyanoferrate, Na₂Fe[Fe(CN)₆]).

### Examples 1-5: Repurposing Prussian White at varying temperatures and at 0% NaCN excess

In Examples 1-5, the aqueous solutions were prepared to have an NaCN concentration of about 3M and a pH of above 11. The mixtures were prepared such that for each mole of Prussian White material there were six moles of NaCN. In other words, the starting concentrations of off-spec Prussian White material in the mixture was 0.5 M.

For each of examples 1-5, the predetermined time was 1.5 hours. In examples 1-5, the varying factor was the predetermined temperature namely 20°C, 50°C, 70°C, 80°C, and 90°C, respectively.

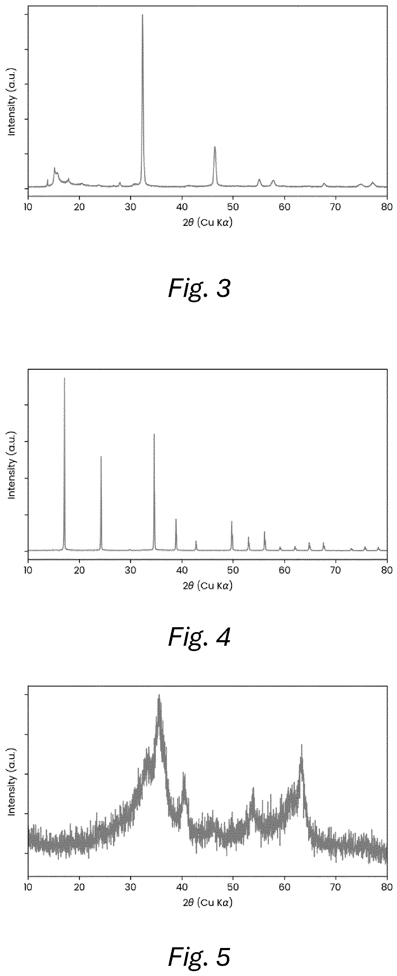

The obtained dried crystallized products were evaluated using XRD and Pawley fitting. Each of the obtained dried crystallized products were concluded to comprise the Prussian white precursor represented by the formula Na₄Fe(CN)₆. The insoluble by-products were analyzed using XRD and Pawley fitting or Rietveld refinement. Using XRD and Rietveld refinement the insoluble by-products from Example 1 were concluded to comprise mainly undissolved off-spec Prussian White material having a relatively low sodium content and a relatively high amount of cubic phase. Using XRD and Pawley fitting the insoluble by-products from Examples 2-5 were concluded to comprise mainly iron(III) oxide hydroxide. The XRD pattern obtained from the dried crystallized product obtained in Example 1 is presented in figure 3. The XRD pattern obtained from the insoluble by-products from Example 1 is presented in figure 4. The XRD pattern obtained from the insoluble by-products from Example 2 is presented in figure 5.

The dried crystallized products had a pale yellow tint. In the example performed at 20°C the insoluble by-products were blue. In the examples performed at higher temperatures higher than 20°C the insoluble by-products were brown.

Examples 1-5 were performed in triplicate. The reaction conditions, yield of Prussian white precursor, and yield of insoluble by-products are presented in table 1.

### Examples 6-10: Repurposing Prussian White at varying temperatures and at 20% NaCN excess

Examples 6-10 were prepared in a similar fashion as Examples 1-5, the only difference being the amount of NaCN. In Examples 6-10, the concentration of NaCN in the aqueous solution was 3.6 M. This corresponds to a 20% stoichiometric excess of NaCN to off-spec Prussian White material.

Each of the obtained dried crystallized products were evaluated using XRD and Pawley fitting. Each of the obtained dried crystallized products were concluded to comprise the Prussian white precursor represented by the formula Na₄Fe(CN)₆. The insoluble by-products were analyzed using XRD and Pawley fitting or Rietveld refinement. Using XRD and Rietveld refinement the insoluble by-products from Example 6 were concluded to comprise mainly undissolved off-spec Prussian White material having a relatively low sodium content and a relatively high amount of cubic phase. Using XRD and Pawley fitting the insoluble by-products from Examples 7-10 were concluded to comprise mainly iron(III) oxide hydroxide. Each of the dried crystallized products from Examples 6-10 displayed similar XRD patterns as illustrated in figure 3. The XRD pattern obtained from the insoluble by-product of Example 6 was similar to that illustrated in figure 4. The XRD patterns obtained from the insoluble by-products from Example 7-10 were similar to that illustrated in figure 5.

The dried crystallized products had a pale yellow tint. In the example performed at 20°C the insoluble by-products were blue. In the examples performed at higher temperatures higher than 20°C the insoluble by-products were brown.

Examples 6-10 were performed in triplicate. The reaction conditions, yield of Prussian white precursor, and yield of insoluble by-products are presented in table 1.

### Example 11: Repurposing Prussian White at 50% NaCN excess

Example 11 was prepared in a similar fashion as Examples 1-5, the difference being the amount of NaCN. In Example 11, the concentration of NaCN in the aqueous solution was 4.5 M. This corresponds to a 50% stoichiometric excess of NaCN to off-spec Prussian White material. Example 11 was performed at 70°C.

The obtained dried crystallized product was evaluated using XRD and Pawley fitting. The obtained dried crystallized products were concluded to comprise the Prussian white precursor represented by the formula Na₄Fe(CN)₆. The insoluble by-products were analyzed using XRD and Pawley fitting or Rietveld refinement. Using XRD and Pawley fitting the insoluble by-products from Example 11 were concluded to comprise mainly iron(III) oxide hydroxide.

The dried crystallized products had a pale yellow tint. The insoluble by-products obtained in Example 11 were concluded to be mainly iron(III) oxide hydroxide.

The reaction conditions, yield of Prussian white precursor, and yield of insoluble by-products of Examples 11 are presented in table 1.

### Example 12: Repurposing Prussian White at 100% NaCN excess

Example 12 was prepared in a similar fashion to Examples 1-5, the difference being the amount of NaCN. In Example 12, the concentration of NaCN in the aqueous solution was 6 M. This corresponds to a 100% stoichiometric excess of NaCN to off-spec Prussian White material. Example 12 was performed at 70°C.

Each of the obtained dried products were evaluated using XRD and Pawley fitting. Each of the obtained dried products were concluded to comprise the Prussian white precursor represented by the formula Na₄Fe(CN)₆. The insoluble by-products were analyzed using XRD and Pawley fitting and was concluded to comprise mainly iron(III) oxide hydroxide.

The dried crystallized products had a pale yellow tint, and the insoluble by-products had a brown tint.

The reaction conditions, yield of Prussian white precursor, and amounts of insoluble by-products of Example 12 are presented in table 1.

### Comparative Example 1 and 2: Repurposing Prussian White using NaOH instead of NaCN

Comparative examples 1 and 2 were prepared in a similar fashion to Examples 1-5. However, instead of NaCN in the aqueous solution, sodium hydroxide (NaOH) was used. In Comparative example 1 the concentration of NaOH was 1 M and the concentration of off-spec Prussian White was 0.5 M. This corresponds to 0% stoichiometric excess of NaOH to off-spec Prussian White material. In Comparative Example 2 the NaOH was provided in a 20% stoichiometric excess.

Each of the obtained dried crystallized products were evaluated using XRD and Pawley fitting. Each of the obtained dried crystallized products were concluded to comprise the Prussian white precursor represented by the formula Na₄Fe(CN)₆. The insoluble by-products were analyzed using XRD and Pawley fitting and was concluded to comprise mainly iron(III) oxide, Fe₂O₃.

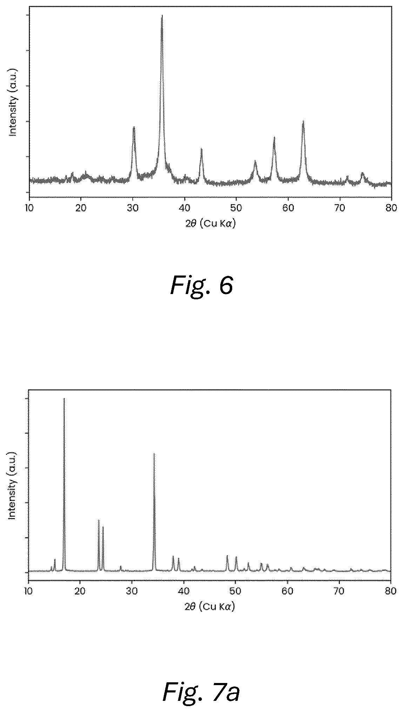

The XRD pattern obtained from the insoluble by-products from Comparative Example 1 is presented in figure 6.

The dried crystallized products had a pale yellow tint, and the insoluble by-products had a brown tint.

The reaction conditions, yield of Prussian white precursor, and amounts of insoluble by-products of Comparative examples 1 and 2 are presented in table 1.

**Table 1: Summary of reaction conditions, for examples 1-12 and comparative examples 1 and 2. Yield of PW precursor and insoluble by-products. It is understood that yields are presented as average yield in the examples where replicates were performed. It is contemplated that on the occasions that the individual exceeds 100%, a small portion of solid NaCN may be present in the filtrated and dried material.**

| Example # | Temperature [°C] | Excess of NaCN [%] | Yield of PW precursor [%] | Yield of insoluble by-products [wt%] |
|---|---|---|---|---|
| 1 | 20 | 0 | 79.4 | 15.8 |
| 2 | 50 | 0 | 91.1 | 1.5 |
| 3 | 70 | 0 | 88.9 | 1.3 |
| 4 | 80 | 0 | 86.9 | 2.0 |
| 5 | 90 | 0 | 87.7 | 1.7 |
| 6 | 20 | 20 | 80.9 | 17.4 |
| 7 | 50 | 20 | 96.0 | 1.0 |
| 8 | 70 | 20 | 96.5 | 0.6 |
| 9 | 80 | 20 | 96.2 | 0.8 |
| 10 | 90 | 20 | 96.7 | 0.6 |
| 11 | 70 | 50 | 101.3 | 0.1 |
| 12 | 70 | 100 | 106.9 | 0.1 |

| Comparative Example # | Temperature [°C] | Excess of NaOH [%] | Yield of PW precursor [%] | Yield of insoluble by-products [wt%] |
|---|---|---|---|---|
| C1 | 70 | 0 | 44.3 | 23.3 |
| C2 | 70 | 20 | 48.0 | 23.1 |

In view of the above it can be concluded that the yield of Prussian white precursor material is higher, and the yield of insoluble by-products is lower when using NaCN as compared to NaOH. It can further be concluded that the yield of Prussian White precursor when using NaCN is higher at, e.g., 50°C as compared to 20°C. Additionally, it can be concluded that utilizing an excess of NaCN improves the yield of Prussian White precursor and decreases the yield of insoluble by-products.

### Example 13-20: Repurposing off-spec Prussian White at varying temperatures and varying reaction times

Examples 13-20 were conducted in a similar fashion to examples 11. Here, the repurposing method was conducted at temperatures of 50°C, 70°C, 80°C and 90°C. The predetermined time of Examples 13-16 was 30 minutes. The predetermined time (reaction time) of Examples 17-20 was 10 minutes.

Each of the obtained dried products were evaluated using XRD and Pawley fitting. Each of the obtained dried products were concluded to comprise the Prussian white precursor represented by the formula Na₄Fe(CN)₆. The insoluble by-products were analyzed using XRD and Pawley fitting and was concluded to comprise mainly iron(III) oxide hydroxide.

The dried crystallized products had a yellow tint, and the insoluble by-products had a brown tint.

Examples 13, 15, 16, 18,19, and 20 were performed in duplicate and Examples 14 and 17 were performed in triplicate. The reaction conditions, yield of Prussian white precursor, and yield of insoluble by-products of Examples 13-20 are presented in table 2.

**Table 2: Summary of reaction conditions, for examples 13-20.**

| Example # | Temperature [°C] | Excess of NaCN [%] | Yield of PW precursor [%] | Yield of insoluble by-products [wt%] |
|---|---|---|---|---|
| 13 | 50 | 20 | 94.5 | 0.4 |
| 14 | 70 | 20 | 96.2 | 0.9 |
| 15 | 80 | 20 | 96.8 | 0.7 |
| 16 | 90 | 20 | 96.9 | 0.6 |
| 17 | 50 | 20 | 94.9 | 1.0 |
| 18 | 70 | 20 | 94.6 | 0.9 |
| 19 | 80 | 20 | 95.7 | 1.0 |
| 20 | 90 | 20 | 95.2 | 0.9 |

In light of examples 13-20, it can be concluded that the method of the present disclosure results in over 90 % yield of Prussian White precursor already after 10 minutes and over 96 % yield Prussian White precursor in certain conditions after 30 minutes.

### Example 21: Manufacturing Prussian White material from repurposed off spec Prussian White material

Prussian White precursor obtained from Examples above was dissolved in deionized water to form an aqueous solution. Subsequently, the pH of the aqueous solution was lowered to about 3 by introducing sulfuric acid. The aqueous solution was heated and maintained at a temperature of between 80°C and 95°C for an extended time to form a suspension of a Prussian White material. After the 6 hours of reaction, a solid-liquid separation (filtering step) was carried out on the suspension to obtain a filter cake. The filter cake was washed with deionized water and subsequently dried, thereby obtaining Prussian white material in the form of particles (discrete moieties of matter).

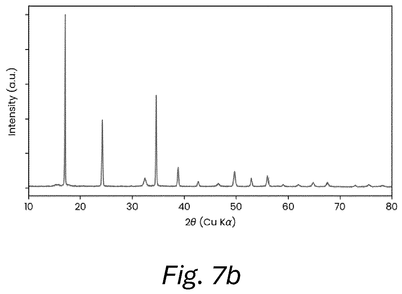

Off spec Prussian white used to manufacture the Prussian White precursor and the obtained Prussian White material was analyzed using XRD and Rietveld refinement as described under Material characterization. A diffractogram of the obtained Prussian White material manufactured can be observed in Figure 7a. A diffractogram of an off-spec Prussian White material used to produce the Prussian White precursors is presented in figure 7b. It was concluded that the obtained Prussian White material comprised more of a relatively high sodium-content hydrated rhombohedral phase (R3 space group symmetry) and less of the relatively low sodium-content cubic phase as compared to the off-spec material. The presence of the rhombohedral phase is for example indicated by the peaks observable at a 2Θ of about 24.45 and 27.87 in figure 7a. Consequently, it can be concluded that the obtained Prussian White material has a higher sodium content as compared to the off-spec material.

### Material characterization

### X-ray powder diffraction

XRD and Pawley fitting was conducted to evaluate what materials were present in each of the crystallized dried products as well as the insoluble by-products obtained in examples 2-5, 7-10, 12-19 and comparative Examples 1-2. XRD and Rietveld refinement was conducted to determine the crystal structure of the off-spec Prussian White material (figure 7b), the insoluble by-products being unreacted Prussian white material (figure 4), and the obtained Prussian White material from example 19 (figure 7a). The XRD was conducted using a Bruker D8 Advance diffractometer equipped with a Cu Kα (λ1 = 1.540596 Å, λ2 = 1.544390 Å) source and a LYNXEYE XE-T detector over the range of 10-120 (2Θ) with a scanning step of 0.021°.

Terms, definitions and embodiments of all aspects of the present disclosure apply mutatis mutandis to the other aspects of the present disclosure.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method for recovering an off-spec Prussian White material comprising:
a) providing an off-spec Prussian White material;
b) reacting said off-spec Prussian White material with an aqueous solution comprising sodium cyanide (NaCN) or potassium cyanide (KCN) under conditions that allow for at least one Prussian White precursor to form.

2. The method according to claim 1, wherein said off-spec Prussian White material is derived from a failed Prussian White slurry, a failed Prussian White manufacturing process, a spent, discarded, or off-spec electrode, and/or a spent, discarded or off-spec battery cell.

3. The method according to claim 1 or claim 2, wherein said off-spec Prussian White material is defined by AₐX¹[X²(CN)₆]_{1-y}, wherein A is Na or K, a ≤ 2, 0 ≤ y ≤ 0.2, and wherein X¹ and X² are individually selected from Fe, Mn, Co, or Cr.

4. The method according to claim 3, wherein a < 1.8, such as 1 < a < 1.8.

5. The method according to any one of the preceding claims, where said at least one Prussian White precursor is a sodium or potassium hexacyanometallate.

6. The method according to any one of the preceding claims, wherein said at least one Prussian White precursor is defined by A₄X¹(CN)₆ and/or A₄X²(CN)₆, wherein A is Na or K, and wherein X¹ and X² are individually selected from Co, Cr, Fe, and Mn.

7. The method according to any one of the preceding claims, wherein said step b) is performed at a temperature of from 40 to 95°C, preferably from 50 to 90°C.

8. The method according to any one of the preceding claims, wherein said step b) is performed at a pH of from 8 to 14, preferably from 9 to 13.5, more preferably from 10 to 13.

9. The method according to any one of the preceding claims, wherein the amount of sodium cyanide (NaCN) or potassium cyanide (KCN) in said aqueous solution is in stoichiometric excess relative to the amount required to react with said off-spec Prussian White material and form said Prussian White precursor.

10. The method according to claim 9, wherein said stoichiometric excess of sodium cyanide (NaCN) or potassium cyanide (KCN) ranges from 15% to 100%, preferably from 20% to 100% above the amount required to react with said off-spec Prussian White material and form said Prussian White precursor.

11. The method according to any one of the preceding claims, wherein said method further comprises:
c) reacting said Prussian White precursor, after said step b), with an acid selected from H₂SO₄, H₄C₂O₂, H₂C₂O₄, H₂CO₂, H₃PO₄, H₃PO₃, HCl, and HClO₂ under conditions that allow for a second Prussian White material to form.

12. The method according to claim 11, wherein said second Prussian White precursor is defined by A_{b}X¹[X²(CN)₆]_{1-y}, wherein A is Na or K, 1.8 ≤ b ≤ 2, 0 ≤ y ≤ 0.2, and wherein X¹ and X² are individually selected from Fe, Mn, Co, and Cr.

13. The method according to claim 11 or claim 12, wherein said step c) is performed at a pH of from 1.8 to 4.5, preferably from 2 to 3.5.

14. The method according to any one of claims 11-13, wherein said step c) is performed at a temperature of from 65 to 95°C, preferably from 75 to 95°C.

15. A system for recovering an off-spec Prussian White material comprising a first reactor unit configured to:
a) receive an off-spec Prussian White material; and
b) conduct a first reaction of said off-spec Prussian White material with an aqueous solution comprising sodium cyanide (NaCN) or potassium cyanide (KCN) under conditions that allow for at least one Prussian White precursor to form.

16. The system according to claim 15, wherein said system further comprises a second reactor unit configured to:
c) conduct a second reaction of said Prussian White precursor with an acid selected from H₂SO₄, H₄C₂O₂, H₂C₂O₄, H₂CO₂, H₃PO₄, H₃PO₃, HCl, and HClO₂ under conditions that allow for a second Prussian White material to form.
